# EUROPEAN PATENT APPLICATION

(11) **EP 2 336 814 A1**
(43) Date of publication of application: **22.06.2011**
(21) Application number: 09306205.7
(22) Date of filing: 10.12.2009
(51) Int. Cl.: G02B 6/12, H01S 5/026

(54) **A monolithic integrated optical device**

(71) Applicant: Alcatel Lucent, 75008 Paris (FR)
(72) Inventor: Achouche, Mohand, 91460 Marcoussis (FR)
(74) Representative: Shamsaei Far, Hassan

(57) **Abstract**

A monolithic optical device and a method for controlling wavelength propagation in the device are disclosed. The device comprises a transmitter (11) adapted for transmitting a first optical wavelength (12) and a receiver (T) adapted for receiving a second optical wavelength (R) and a waveguide region (13) adapted to allow for propagation of the first optical wavelength and the second optical wavelength. The waveguide region comprises a plurality of diluted optical waveguides, at least some of the diluted optical waveguides having material refractive indices being different from each other. Said at least some of the diluted optical waveguides provide a confinement on a propagation path of at least the first optical wavelength.

## Description

The present invention relates to monolithic optical devices and in particular to transmitter/receiver devices also known as duplexers.

### BACKGROUND ART

Currently FTTH (fiber to the home) transceivers, also referred to as duplexers, used for transmitting and receiving optical signals are typically based on either discrete optical components, for example such as distributed feed-back (DFB) Lasers, PIN/APD detectors and the like, or planar lightwave circuit (PLC) designs. These designs offer low levels of integration and require assembly from multiple parts which typically provide little opportunity to further reduce costs. On the other hand, monolithic integrated transceivers made on InP material are identified as devices capable of providing a relatively more efficient integration platform allowing to integrate all the transceiver functions into one single InP chip.

A conventional monolithic duplexer (transmit/receive) device for access operations is typically composed of two distinct devices monolithically integrated on an InP chip that are able to operate simultaneously. These two devices are a transmitter, typically a DFB laser adapted for transmitting typically at or about 1.3µm for signal emission and a receiver (detector) such as a photodiode (for example PIN or APD) adapted for receiving typically at or about 1.5µm for signal detection. However, in operation it may occur that the receiver (detector) detects the transmit light emitted by the transmitter. This is undesirable because it worsens or limits the performance of the device.

### SUMMARY

In order to overcome the above drawback, two solutions are known related to monolithic integrated transceivers:
The first solution relates to the use of an absorbing section provided between the DFB section and the photodiode section of the duplexer (see for example, A. Plais et al., "Integrated BRS/Ridge transmit receive device fabrication using well established III-V material technology", 10th IPRM conference, Tsukuba, Japan, 1998). In such solution, the isolation efficiency of the device becomes limited by the absorption capability of the material used and the thickness provided in the absorption section which is typically similar to the active region of the DFB section. In fact, typically the active region of a DFB laser is relatively very thin whereas a high detection efficiency of the absorption section requires a thick active region, thus making this solution less desirable.

The second solution as reported in the literature by One-chip Photonics Inc. (V.I. Tolstikhin et al., "One-step growth optical transceiver PIC in InP", ECOC'09, Vienna, Austria, 2009), proposes the use of a PIC (Photonic Integrated Circuit) approach with integration of respectively a DFB laser for emission, an SOA for optically pre-amplified reception, a PIN detector, a 2λ splitter and an SSC (spot size converter) adapter. The main limitation of this solution appears to be the complexity in manufacturing especially as regards the yield for a technology that typically needs to be low cost. The large number of integrated passive and active functions on a single PIC chip makes this fabrication very complex. In addition, the amplified spontaneous emission of the SOA limits considerably the level of sensitivity of the receiver for low-medium bit rate operations.

It is therefore desirable to provide a solution towards reducing cross-talk between the optical components on a monolithic integrated optical device which overcomes at least some of the drawbacks associated to the known solutions. Embodiments of the present invention aim at providing such solution, as proposed herein, according to which the same optical waveguide in a monolithic integrated optical device is used both for the transmitter component and for the receiver (detector) component of the device, the waveguide being capable of coupling received light, typically at about 1.5µm, to the photodiode while causing the signal to be transmitted by the laser, typically at about 1.3µm, to propagate in the optical waveguide without affecting the detector.

Throughout this specification reference is frequently made to a transmit wavelength of 1.3µm and receive (detection) wavelength of 1.5µm. It is however to be noted that while these values are typical values for their respective applications, the invention is not to be construed to be limited to only these values and other values may also be used within the scope of the claimed invention.

Due to the multimode properties of diluted optical waveguides, and to the material refractive index differences at both transmit and receipt wavelengths (*e.g*. 1.3 and 1.5µm), it becomes possible to deviate a 1.5µm signal to the photodiode absorption region while keeping straight propagation of the 1.3µm signal. In fact, in multimode waveguides, modes at 1.5µm typically have a pseudoperiodic up and down propagation in the waveguide due to a strong overlap of the modes; whereas modes at 1.3µm remain confined because of the comparatively poor overlap of the modes.

Accordingly, some embodiments feature a monolithic optical device comprising a transmitter adapted for transmitting a first optical wavelength and a receiver adapted for receiving a second optical wavelength wherein the optical device further comprises a waveguide region adapted to allow for propagation of the first optical wavelength and the second optical wavelength, the waveguide region comprising a diluted optical waveguide comprising a plurality of layers having material refractive indices being different from each other thereby providing a confinement on a propagation path of at least the first optical wavelength. According to some specific embodiments, at least some of the layers of the diluted optical waveguide are adapted to direct the second optical wavelength towards an absorption region of the receiver.

According to some embodiments, there is provided a method for controlling a wavelength propagation path in a monolithic optical device, the device having a waveguide region comprising a diluted optical waveguide comprising a plurality of layers having material refractive indices being different from each other the method comprising:
- propagating a first optical wavelength through the waveguide region wherein said propagation of the first optical wavelength is confined y means of said layers of the diluted optical waveguide.

According to some specific embodiments the method further comprises directing, through the diluted optical waveguide, a second wavelength towards an absorption region of the receiver.

According to some specific embodiments, a first layer of the diluted optical waveguide changes direction of an incoming light according to a first refractive index, a second layer of the diluted optical waveguide changes direction of the light coming from the first layer of the diluted optical waveguide according to a second refractive index, wherein the first refractive index and the second refractive index cause the light to be guided to propagate through a predetermined path.

According to some embodiments there is provided a fixed access equipment comprising the monolithic optical device as described and claimed herein. These and further features and advantages of the present invention are described in more detail, for the purpose of illustration and not limitation, in the following description as well as in the claims with the aid of the accompanying drawings.

### BRIEF DESCRIPTION OF THE DRAWINGS

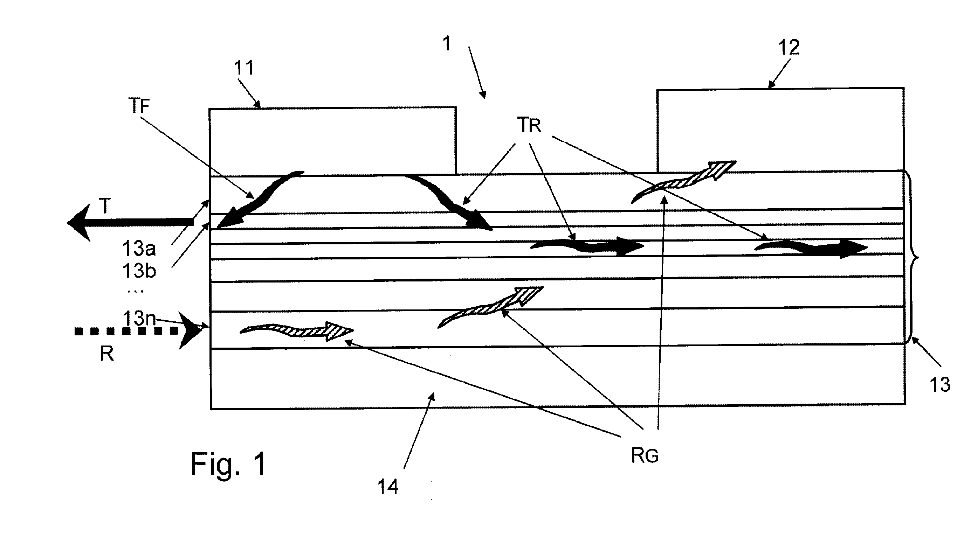

Figure 1 is an exemplary schematic cross-section representation of a monolithic duplexer including a transmit source and a receive detector and an optical waveguide according to some embodiments.

### DETAILED DESCRIPTION

The monolithic optical device 1 of figure 1, shown as an exemplary schematic cross-section representation, comprises a transmit source 11, typically to transmit a 1.3µm wavelength, and a receive detector 12, typically to receive and detect a 1.5µm wavelength and an optical waveguide region generally shown by reference numeral 13 comprising a diluted optical waveguide which is composed of a plurality of layers 13a, 13b,...13n, the whole structure being provided over a substrate 14. The transmit source 11 may be for example a DFB laser source, the receive detector 12 may be for example a photodiode and the substrate may be for example made of InP, GaAs or Si material.

The plurality of the layers 13a, 13b,...13n of the diluted optical waveguide are disposed in alternate high optical index and low optical index layers. The thickness of each of such layers is chosen according to design requirements. The terms "diluted optical waveguide" in the context of the present description are meant to refer to a waveguide structure in which various layers with different refractive indices are used.

The laser source 11 is configured to transmit typically a 1.3µm optical signal. The transmit signal is typically emitted in two propagating directions of the optical waveguide which typically are ±Z directions. These two propagating directions are shown in the figure by means of solid arrows. It is assumed that one direction of propagation is the desired direction for the transmit optical signal, namely the direction in which the optical signal propagates directly towards the output port of the device. This direction of propagation, herein referred to as forward direction, is shown in the figure by a solid arrow T_{F}. The optical signal propagating in the forward direction T_{F} is then output from the device as shown by means of solid arrow T.

On the other hand, the other direction of propagation may be an undesired direction for the transmit optical signal because in that direction the optical signal propagates inside the waveguide 13 towards the region where the photodetector 12 is located thereby causing the photodetector 12 to detect an unwanted optical signal which is not the received signal input in the device 1. This direction of propagation, herein referred to as reverse direction, is shown in the figure by a solid arrow T_{R}. This direction of propagation is therefore undesirable.

However, as already mentioned above, the optical waveguide region 13 comprises diluted optical waveguide having a plurality of layers, 13a, 13b,...13n, with material refractive indices which are different with respect to each other.

For the purpose of understating the present description, it is to be noted that a refractive index of a material represents the change in the speed of light inside that material. As a result of the change in the speed of light, the light entering such material, from a material having a different refractive index, changes direction as it propagates through the material. This property is used in order to confine the propagation of the transmit optical signal.

Based on this property of changing the direction of the incoming light, the diluted optical waveguide having layers 13a, 13b,...13n, may be chosen with respective refractive indices such that the light emitted from the laser source 11 is guided in the reverse direction T_{R} in a controlled manner such that it is maintained, as it propagates, at a certain distance away from the photodetector 12 and therefore is not detected by the photodetector 12.

In the figure, it may be assumed, by way of example, that the first layer 13a of the diluted optical waveguide changes direction of the incoming light according to a first refractive index, the second layer 13b of the diluted optical waveguide changes direction of the light coming from the first layer 13a according to a second refractive index. This change of direction is repeated as often as necessary as the light propagates through the waveguide region and passes from one layer of the diluted optical waveguide to another, while the value of the respective indices of the layers of the diluted optical waveguide is one parameter to be chosen such that the successive reflections of light guide the light through a predetermined path and avoids it from being detected by the photodetector 12. Examples of such layers with a high optical index may be GalnAsP, and for layer with a low optical index may be InP.

Other parameters such as the thickness of the layers 13a, 13b,...13n, as well as the composition x and y of GaₓIn₁₋ₓAs_{y}P_{1-y} are also taken into account for designing a device according to embodiments of the invention. As an example, the multimode waveguide may contain a plurality of Ga_{0.28}In_{0.72}As_{0.61}P_{0.39} and InP layers. The thicknesses of the Ga_{0.28}In_{0.72}As_{0.61}P_{0.39} layers may be comprised between 0.2µm and 0.6µm whereas the thickness of InP may be comprised between 0.05µm and 0.3µm.

The receive optical signal, represented in the figure by means of a dotted arrow R, and typically having a wavelength of 1.5µm, is coupled to the device at an input port of the optical waveguide region 13. Here again, by analogy to description related to the transmit optical signal, the refractive indices of the diluted optical waveguides cause changes in the direction of propagation of the receive optical signal R so as to direct the signal towards the photodetector 12 (typically directed to an absorption region thereof). The propagation path of the receive optical signal as it is guided towards the photodetector 12 is shown in the figure by means of hatched arrows R_{G}.

In this manner, cross-talk between the transmit optical signal (*e.g*. 1.3µm) and the receive optical signal (*e.g*. 1.5µm) is eliminated or at least reduced.

It is to be noted that optical waveguides used for coupling 1.5µm signal to the photodetector 12 may be compatible with both PIN and APD type detectors as needed for devices such as a duplexer with improved signal to noise ratio.

The present solution may be used in fixed access telecom equipment and future generations of integrated duplexers.

It is to be noted that the list of structures corresponding to the claimed means is not exhaustive and that one skilled in the art understands that equivalent structures can be substituted for the recited structure without departing from the scope of the invention.

## Claims

1. A monolithic optical device comprising a transmitter adapted for transmitting a first optical wavelength and a receiver adapted for receiving a second optical wavelength wherein the optical device further comprises a waveguide region adapted to allow for propagation of the first optical wavelength and the second optical wavelength, the waveguide region comprising a diluted optical waveguide comprising a plurality of layers having material refractive indices being different from each other thereby providing a confinement on a propagation path of at least the first optical wavelength.

2. The device of claim 1, wherein at least some of the layers of the diluted optical waveguide are adapted to direct the second optical wavelength towards an absorption region of the receiver.

3. A fixed access equipment comprising the device of any one of the claim 1 or claim 2.

4. A method for controlling a wavelength propagation path in a monolithic optical device, the device having a waveguide region comprising a diluted optical waveguide comprising a plurality of layers having material refractive indices being different from each other the method comprising:
- propagating a first optical wavelength through the waveguide region wherein said propagation of the first optical wavelength is confined y means of said layers of the diluted optical waveguide.

5. The method of claim 4 further comprising directing, through the diluted optical waveguide, a second wavelength towards an absorption region of the receiver.

6. The method of claim 4 or claim 5 wherein a first layer of the diluted optical waveguide changes direction of an incoming light according to a first refractive index, a second layer of the diluted optical waveguide changes direction of the light coming from the first layer of the diluted optical waveguide according to a second refractive index, wherein the first refractive index and the second refractive index cause the light to be guided to propagate through a predetermined path.
